Europäisches Patentamt

European Patent Office

Office européen des brevets

(19)

(11) Numéro de publication : **0 292 366 B1**

# (12) FASCICULE DE BREVET EUROPEEN

(45) Date de publication du fascicule du brevet :
**22.04.92 Bulletin 92/17**

(51) Int. Cl.⁵ : **H01R 39/40**

(21) Numéro de dépôt : **88401160.2**

(22) Date de dépôt : **11.05.88**

(54) **Plaque porte-balais notamment pour moteur électrique.**

(30) Priorité : **21.05.87 FR 8707132**

(43) Date de publication de la demande :
**23.11.88 Bulletin 88/47**

(45) Mention de la délivrance du brevet :
**22.04.92 Bulletin 92/17**

(84) Etats contractants désignés :
**DE ES GB IT SE**

(56) Documents cités :
**DE-A- 3 328 683**
**US-A- 3 716 735**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Pillerel, Alain**
**2 Impasse des Résidences Rue de Belfort**
**F-25400 Audincourt (FR)**

(74) Mandataire : **Mestre, Jean et al**
**c/o CABINET LAVOIX 2, place d'Estienne d'Orves**
**F-75441 Paris Cédex 09 (FR)**

## Description

La présente invention concerne une plaque porte-balais notamment pour moteur électrique, du type comportant une première portion de support de porte-balais et des moyens escamotables de blocage des balais en position escamotée dans les porte-balais pour le montage de celle-ci sur le collecteur du moteur.

Actuellement, tous les moteurs électriques et plus particulièrement ceux à courant continu, destinés à être montés sur des véhicules automobiles, sont ou vont être montés de manière automatique sur des chaînes de production.

Dans ce domaine, l'usage a consacré une règle qui est de tout assembler ou d'empiler suivant une seule direction parallèle à l'axe de rotation de l'induit du moteur. Cependant, les balais, destinés à amener le courant électrique au collecteur de l'induit du moteur se déplacent dans un plan perpendiculaire à l'axe de celui-ci. Il est rappelé que les balais, qui sont logés chacun dans une gaine tubulaire qui est également généralement appelée "porte-balais", supportent une poussée axiale donc perpendiculaire à l'axe de l'induit, exercée par des moyens élastiques tels que des ressorts, en direction du collecteur, pour assurer une pression de contact compatible avec un bon passage du courant, et donc avec une résistance minimale entre les balais et le collecteur en rotation.

S'il est relativement facile de monter les balais et les ressorts dans les porte-balais, et ceci de manière automatique, il est pratiquement impossible ou tout au moins trop délicat et trop coûteux en équipement, de concevoir un système qui écarte les balais pendant que l'on introduit entre ceux-ci, le collecteur du moteur.

Il existe déjà dans l'état de la technique un certain nombre de plaques porte-balais équipées de moyens de blocage des balais en position escamotée lors du montage de la plaque sur le collecteur. Ces moyens de blocage sont constitués par exemple par des rondelles ou des portions de tube poussées par le collecteur lors du montage. Cependant, ces dispositifs présentent un certain nombre d'inconvénients dans la mesure où ils sont relativement coûteux, et que pour la plupart, ils ne sont pas récupérables.

Un exemple d'un tel dispositif est donné par le document US-A-3 716 735, par rapport auquel la revendication 1 a été délimitée.

Le but de l'invention est donc de résoudre ces problèmes en proposant une plaque porte-balais qui comporte des moyens de blocage des balais en position escamotée lors du montage de la plaque sur le collecteur mais qui soit simple, fiable, d'un prix de revient peu élevé et qui permette de récupérer les moyens de blocage par exemple pour les réutiliser.

A cet effet, l'invention a pour objet une plaque porte-balais, notamment pour moteur électrique, du type comportant une première portion de support de porte-balais et des moyens escamotables de blocage des balais en position escamotée dans les porte-balais pour le montage de celle-ci sur le collecteur du moteur, caractérisée en ce que les moyens de blocage des balais comprennent un organe de blocage présentant des branches s'étendant à travers des trous correspondants d'une seconde portion de la plaque porte-balais, décalée axialement par rapport à la première, lesdites branches s'étendant d'une part au moins en partie en regard des porte-balais pour bloquer les balais en position escamotée et d'autre part partiellement dans le trajet de déplacement du collecteur du moteur pour libérer les balais lors du montage de la plaque sur le collecteur.

Selon une autre caractéristique, la section des branches de l'organe de blocage est déterminée de manière que les balais en appui sur ces branches soient suffisamment escamotés pour permettre le passage du collecteur et qu'une partie de cette section des branches s'étende dans le trajet de déplacement du collecteur.

L'invention sera mieux comprise à l'aide de la description qui va suivre, donnée uniquement à titre d'exemple et faite en se référant aux dessins annexés, sur lesquels :

– la Fig.1 représente une vue de dessus en perspective d'une plaque porte-balais selon l'invention;

– la Fig.2 représente une vue de dessous en perspective d'une plaque porte-balais selon l'invention; et

– la Fig.3 illustre le montage d'une plaque porte-balais selon l'invention sur un collecteur de moteur électrique.

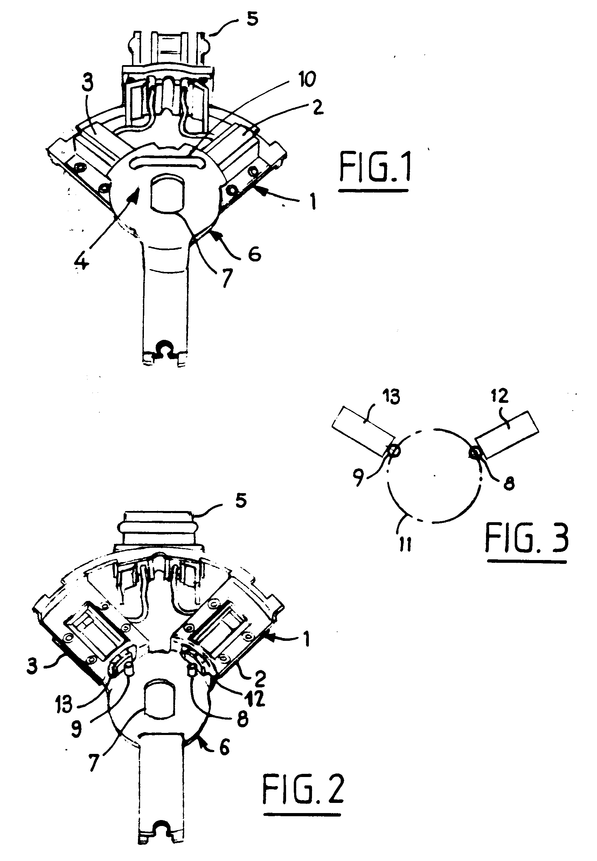

Ainsi qu'on peut le voir sur les Fig.1 et 2, une plaque porte-balais selon l'invention comporte de manière connue en soi une première portion 1 de support de porte-balais 2 et 3 et des moyens escamotables 4 de blocage des balais en position escamotée dans les porte-balais 2 et 3 pour le montage de celle-ci sur le collecteur du moteur.

La plaque porte-balais selon l'invention comporte également un connecteur 5 permettant d'alimenter les balais à partir de l'extérieur du moteur.

Comme on peut le voir sur ces figures, cette première portion 1 de la plaque porte-balais se présente sous la forme générale d'un Y sur deux branches duquel sont fixés les porte-balais 2 et 3 et dont la troisième branche constitue des moyens de positionnement et de centrage de la plaque sur le reste du moteur.

Ainsi que cela est représenté, la plaque porte-balais selon l'invention comporte une seconde portion 6 décalée axialement par rapport à la première et comportant un évidement central 7 de réception d'un palier de guidage de l'arbre de rotation de l'induit du moteur. Cette seconde portion 6 de la plaque porte-balais comporte également deux trous dans lesquels s'étendent des branches 8 et 9 d'un organe de blocage 10 constituant les moyens de blocage 4 des balais en position escamotée.

Comme on peut le voir plus particulièrement sur les Fig.2 et 3, les branches 8 et 9 de l'organe de blocage 10 s'étendent d'une part au moins en partie en regard des porte-balais 2 et 3 pour bloquer les balais en position escamotée et d'autre part, partiellement dans le trajet de déplacement du collecteur 11 (Fig.3) du moteur pour libérer les balais lors du montage de la plaque sur ce collecteur.

La section des branches 8 et 9 de l'organe de blocage 10 est déterminée de manière que les balais 12 et 13 (Fig.3) en appui sur ces branches, soient suffisamment escamotés pour permettre le passage du collecteur 11 du moteur et qu'une partie de cette section s'étende dans le trajet de déplacement du collecteur pour assurer le dégagement de l'organe de blocage et la libération des balais.

Avantageusement, les branches de l'organe de blocage 10 présentent une section circulaire.

Il va de soi que d'autres modes de réalisation peuvent être envisagés.

Ainsi, par exemple, les branches de l'organe de blocage peuvent présenter une section autre que la section circulaire décrite sur les figures. Par ailleurs, bien que l'on ait représenté une plaque porte-balais comportant deux balais et un organe de blocage 10 à deux branches, il va de soi qu'une plaque porte-balais comportant un autre nombre de balais peut également être envisagée.

Ainsi, la plaque porte-balais peut comporter quatre balais et une seconde portion présentant quatre évidements dans lesquels s'engagent quatre branches d'un organe de blocage.

L'organe de blocage peut facilement être récupéré et il n'est donc plus susceptible de perturber le reste du montage du moteur et le fonctionnement de celui-ci. Par ailleurs, il peut également être réutilisé.

## Revendications

1. Plaque porte-balais, notamment pour moteur électrique, du type comportant une première portion (1) de support de porte-balais (2,3) et des moyens escamotables (4) de blocage des balais (12,13) en position escamotée dans les porte-balais (2,3) pour le montage de celle-ci sur le collecteur (11) du moteur, caractérisée en ce que les moyens de blocage (4) des balais comprennent un organe de blocage (10) présentant des branches (8,9) s'étendant à travers des trous correspondants d'une seconde portion (6) de la plaque porte-balais, décalée axialement par rapport à la première portion (1), lesdites branches (8,9) s'étendant d'une part au moins en partie en regard des porte-balais (2, 3) pour bloquer les balais (12,13) en position escamotée et d'autre part partiellement dans le trajet de déplacement du collecteur (11) du moteur pour libérer les balais (12,13) lors du montage de la plaque sur le collecteur.

2. Plaque porte-balais selon la revendication 1, caractérisée en ce que la section des branches (8,9) de l'organe de blocage (10) est déterminée de manière que les balais en appui sur ces branches soient suffisamment escamotés pour permettre le passage du collecteur (11) et qu'une partie de cette section des branches (8,9) s'étende dans le trajet de déplacement du collecteur (11).

3. Plaque porte-balais selon la revendication 1 ou 2, caractérisée en ce que les branches (8,9) de l'organe de blocage présentent une section circulaire.

4. Plaque porte-balais selon l'une quelconque des revendications précédentes, caractérisée en ce que la seconde portion (6) de la plaque porte-balais comporte un évidement central (7) de réception d'un palier de guidage de l'arbre de rotation de l'induit du moteur.

## Patentansprüche

1. Bürstenhalterplatte, insbesondere für Elektromotoren, mit einem ersten Trägerteil (1) für Bürstenhalter (2, 3) und zurückziehbaren Blockiermitteln (4) zum Blockieren der Bürsten (12, 13) in in die Bürstenhalter (2, 3) zurückgezogener Stellung zur Montage derselben auf dem Kollektor (11) des Motors, dadurch gekennzeichnet, daß die Blockiermittel (4) für die Bürsten ein Blockierelement (10) umfassen, welches Arme (8, 9) aufweist, die sich durch entsprechende Löcher eines zweiten Teils (6) der Bürstenhalterplatte erstrecken, welches bezüglich des ersten Teils (1) axial versetzt ist, wobei die Arme (8, 9) sich einerseits wenigstens teilweise vor den Bürstenhaltern (2, 3) zur Blockierung der Bürsten (12, 13) in zurückgezogener Stellung und andererseits teilweise in der Versetzungsbahn des Kollektors (11) des Motors zur Freigabe der Bürsten (12, 13) bei der Montage der Platte auf dem Kollektor erstrecken.

2. Bürstenhalterplatte nach Anspruch 1, dadurch gekennzeichnet, daß der Querschnitt der Arme (8, 9) des Blockierelements (10) so bestimmt ist, daß die an diesen Armen anliegenden Bürsten soweit zurückgezogen sind, daß der Kollektor (11) durchtreten kann, und daß ein Teil dieses Querschnitts der Arme (8, 9) sich in die Versetzungsbahn des Kollektors (11) erstreckt.

3. Bürstenhalterplatte nach Anspruch 1 oder 2, dadurch gekennzeichnet, daß die Arme (8, 9) des Blockierelements kreisförmigen Querschnitt haben.

4. Bürstenhalterplatte nach irgendeinem der vorstehenden Ansprüche, dadurch gekennzeichnet, daß der zweite Teil (6) der Bürstenhalterplatte eine zentrale Ausnehmung (7) zur Aufnahme eines Führungslagers für die Drehwelle des Läufers des Motors aufweist.

## Claims

1. A brush-holder plate, in particular for an electric motor, of the type comprising a first portion (1) supporting the brush-holders (2, 3) and retractable means (4) for locking the brushes (12, 13) in a retracted position in the brush-holders (2, 3) for mounting these on the commutator (11) of the motor, characterised in that the locking means (4) for the brushes comprise a locking member (10) having branches (8, 9) which extend through corresponding holes in a second portion (6) of the brush-holder plate which is axially offset with respect to the first portion (1), the said branches (8, 9) extending on the one hand at least partly opposite the brush-holders (2, 3) to lock the brushes (12, 13) in a retracted position and on the other hand partly in the path of movement of the commutator (11) of the motor to release the brushes (12, 13) when the plate is mounted on the commutator.

2. A brush-holder plate according to claim 1, characterised in that the cross-section of the branches (8, 9) of the locking member (10) is determined in such a way that the brushes bearing against these branches are sufficiently retracted to allow the commutator (11) to pass and that part of this cross-section of the branches (8, 9) extends into the path of movement of the commutator (11).

3. A brush-holder plate according to claims 1 or 2, characterised in that the branches (8, 9) of the locking member have a circular cross-section.

4. A brush-holder plate according to any one of the preceding claims, characterised in that the second portion (6) of the brush-holder plate has a central opening (7) to receive a guide bearing for the rotary shaft of the motor armature.

FIG.1

FIG.2

FIG. 3